(19)

**Europäisches Patentamt**
**European Patent Office**
**Office européen des brevets**

(11) **EP 4 637 168 A1**

(12) **EUROPEAN PATENT APPLICATION**
published in accordance with Art. 153(4) EPC

(43) Date of publication:
**22.10.2025 Bulletin 2025/43**

(21) Application number: **22968502.9**

(22) Date of filing: **15.12.2022**

(51) International Patent Classification (IPC):
*H04N 23/60* $^{(2023.01)}$

(52) Cooperative Patent Classification (CPC):
**H04N 23/60**

(86) International application number:
**PCT/JP2022/046243**

(87) International publication number:
**WO 2024/127591 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Astemo, Ltd.**
**Tokyo 100-0004 (JP)**

(72) Inventor: **WATANABE Atsushi**
**Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **CAMERA CALIBRATION DEVICE AND CAMERA CALIBRATION METHOD**

(57)     A camera calibration device includes: a deviation amount calculation unit which calculates a deviation amount between a detection position of a calibration object, which is detected for each of regions, with a predetermined size, of an image obtained by a camera imaging the object through a refractive layer, and a calculation position of the object, which is calculated for each of the regions of an image which the camera is capable of capturing without passing through the refractive layer; an evaluation unit which evaluates the deviation amount for each of the regions; and a correction amount calculation unit which calculates, for each of the regions, a correction amount for correcting the detection position of the object to the calculation position of the object, according to an evaluation result of the deviation amount, and calibrates the camera on the basis of the correction amount of the deviation amount calculated for each of the regions.

*FIG. 2*

**Description**

Technical Field

The present invention relates to a camera calibration device and a camera calibration method.

Background Art

In the New Car Assessment Program (NCAP) which is a representative automobile assessment, a need to enhance safe driving at intersections has been increasing, such as introduction of autonomous emergency braking (AEB) at intersections in 2020. Therefore, when an automobile turns right or left at an intersection, it is necessary to detect an object at a wide horizontal angle of view in order to identify pedestrians and the like around the intersection.

In general, cameras are often mounted at left and right center positions in a vehicle interior. In this case, the camera recognizes an outside world through a windshield (hereinafter, referred to as a "refractive layer") in front of the camera. Therefore, an incident angle of a light ray on the refractive layer increases in a wide-angle portion. When an influence of refraction increases, an environment recognition device which recognizes an environment using an image captured by the camera cannot accurately detect a target.

As a countermeasure against this, PTL 1 discloses a technique described as "measure a pixel shift amount in a first angle of view range by comparing a first image obtained by imaging a calibration chart without a windshield and a second image obtained by imaging the calibration chart through the windshield".

Citation List

Patent Literature

PTL 1: JP 2022-109555 A

Summary of Invention

Technical Problem

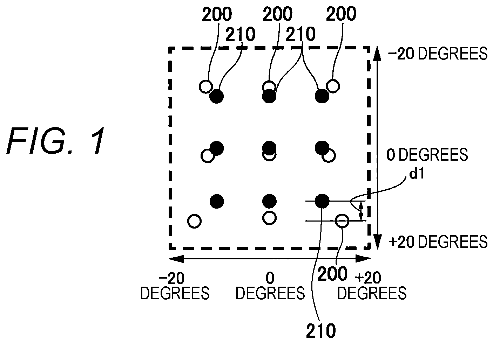

The technique disclosed in PTL 1 obtains a parallax of a central portion by imaging the calibration chart with a stereo camera, estimates a deviation amount in a wide-angle portion from the result, and corrects an influence of refraction of the wide-angle portion. Here, an image which is output by the camera which images the calibration chart through the windshield will be described with reference to FIG. 1.

FIG. 1 is a diagram illustrating an example of the image of the calibration chart captured through the windshield.

In a conventional camera, the calibration chart can be imaged in a range of a horizontal angle of view of -20 degrees to +20 degrees and a range of a vertical angle of view of -20 degrees to +20 degrees. Here, a marker (an example of a feature point) of the calibration chart imaged by a vehicle without the windshield is indicated by a plurality of white points 200 arranged at substantially equal intervals in a vertical direction and a horizontal direction. On the other hand, the marker of the calibration chart imaged by the vehicle on which the windshield is mounted is indicated by a plurality of black points 210 deviated from the white point 200. In a vicinity of the horizontal angle of view of 0 degrees and the vertical angle of view of 0 degrees (a middle of FIG. 1), the black point 210 is at substantially the same position as the white point 200, with almost no deviation. On the other hand, as illustrated in a lower right part of FIG. 1, when the horizontal angle of view and the vertical angle of view increase, the black point 210 shifts and a difference d1 occurs in the vertical direction. Note that although not illustrated, a difference between black point 210 and white point 200 also occurs in the vertical direction.

The technique disclosed in PTL 1 directly measures a pixel shift amount in the vertical direction at a predetermined angle of view, for example, the horizontal angle of view of -20 degrees to +20 degrees, depending on presence or absence of the refractive layer. At the time of this measurement, it is necessary to image the calibration chart in a state where the refractive layer is not mounted on the vehicle and then to image the calibration chart in a state where the refractive layer is mounted on the vehicle. Therefore, it takes much time and effort only to image the calibration chart.

In addition, when the refractive layer is mounted on the vehicle or the refractive layer is removed from the vehicle, dedicated equipment and instruments are required. In addition, for parallax calculation, affine transformation processing information in a state where there is no refractive layer is required, and dedicated equipment is also required to obtain the information. Therefore, a work of calibrating the camera is not easy.

The present invention has been made in view of such a situation, and an object thereof is to facilitate calibration of a camera.

Solution to Problem

A camera calibration device according to the present invention includes: a deviation amount calculation unit which calculates a deviation amount between a detection position of a calibration object, which is detected for each of regions, with a predetermined size, of an image obtained by a camera imaging the object through a refractive layer, and a calculation position of the object, which is calculated for each of the regions of an image which the camera is capable of capturing without passing through the refractive layer; an evaluation unit which evaluates the deviation amount for each of the regions; and a correction amount calculation unit which calculates, for each of the regions, a correction amount for correcting the detection position of the object to the calculation position of the object, according to an evaluation result of the deviation amount, and calibrates the camera on the basis of the correction amount of the deviation amount calculated for each of the regions.

Advantageous Effects of Invention

According to the present invention, the correction amount corresponding to the deviation amount for each region is calculated, so that calibration of the camera can be facilitated.

Brief Description of Drawings

[FIG. 1] FIG. 1 is a diagram illustrating an example of an image of a calibration chart captured through a windshield.
[FIG. 2] FIG. 2 is a block diagram illustrating a schematic configuration example of a camera calibration device according to a first embodiment of the present invention.
[FIG. 3A] FIG. 3A is a perspective view illustrating an example of a two-dimensional calibration chart in which circular markers are arranged according to the first embodiment of the present invention.
[FIG. 3B] FIG. 3B is a perspective view illustrating an example of a two-dimensional calibration chart in which rectangular markers are arranged according to the first embodiment of the present invention.
[FIG. 3C] FIG. 3C is a perspective view illustrating an example of a three-dimensional calibration chart in which circular markers are arranged according to the first embodiment of the present invention.
[FIG. 4A] FIG. 4A is a horizontal cross-sectional view of a refractive layer in a state where a camera is mounted on an automobile according to the first embodiment of the present invention.
[FIG. 4B] FIG. 4B is a vertical cross-sectional view of the refractive layer in a state where the camera is mounted on the automobile according to the first embodiment of the present invention.
[FIG. 5] FIG. 5 is a diagram illustrating an example of a subpixel according to the first embodiment of the present invention.
[FIG. 6] FIG. 6 is a diagram illustrating a state in which a light ray displacement is obtained from an approximate curved surface of a refractive layer modeled by a model generation unit according to the first embodiment of the present invention.
[FIG. 7] FIG. 7 is a diagram illustrating an example of a refractive layer in which a curved surface is approximated by a second-order polynomial according to the first embodiment of the present invention.
[FIG. 8] FIG. 8 is a diagram illustrating an example of a marker appearing in an image obtained by imaging a calibration chart in which black points are arranged in a lattice shape according to the first embodiment of the present invention.
[FIG. 9] FIG. 9 is a diagram illustrating a state when the calibration chart is imaged by a camera according to the first embodiment of the present invention.
[FIG. 10] FIG. 10 is a diagram illustrating a relationship between a detection position and a calculation position of the marker of the calibration chart appearing in the image according to the first embodiment of the present invention.
[FIG. 11] FIG. 11 is a diagram illustrating a deviation amount for each divided region according to the first embodiment of the present invention.
[FIG. 12] FIG. 12 is a flowchart illustrating an example of a camera calibration method according to the first embodiment of the present invention.
[FIG. 13] FIG. 13 is a block diagram illustrating a hardware configuration example of a computer according to the first embodiment of the present invention.
[FIG. 14] FIG. 14 is a flowchart illustrating an example of a camera calibration method according to a second embodiment of the present invention.
[FIG. 15] FIG. 15 is a diagram illustrating a state in which the number of input images, corresponding to the deviation amount, is designated according to the second embodiment of the present invention.
[FIG. 16] FIG. 16 is a diagram illustrating a position where a calibration chart is installed according to the second embodiment of the present invention.

[FIG. 17A] FIG. 17A is a diagram illustrating a position of the calibration chart appearing in an entire image according to the second embodiment of the present invention.

[FIG. 17B] FIG. 17B is a diagram illustrating a position of the calibration chart appearing closer to a left side of the image according to the second embodiment of the present invention.

[FIG. 17C] FIG. 17C is a diagram illustrating a position of the calibration chart appearing closer to an upper side of the image according to the second embodiment of the present invention.

[FIG. 18] FIG. 18 is a flowchart illustrating an example of a camera calibration method according to a third embodiment of the present invention.

[FIG. 19] FIG. 19 is a diagram illustrating a state in which the number of input images, corresponding to the deviation amount, is designated according to the third embodiment of the present invention.

[FIG. 20] FIG. 20 is a flowchart illustrating an example of a camera calibration method according to a fourth embodiment of the present invention.

Description of Embodiments

Hereinafter, embodiments of the present invention will be described with reference to the accompanying drawings. In the present specification and the drawings, components having substantially the same function or configuration are denoted by the same reference numerals, and redundant description is omitted. The present invention is applicable to, for example, an arithmetic device for vehicle control with which an advanced driver assistance system (ADAS) or an in-vehicle electronic control unit (ECU) for autonomous driving (AD) can communicate.

[First Embodiment]

<Schematic configuration example of camera calibration device>

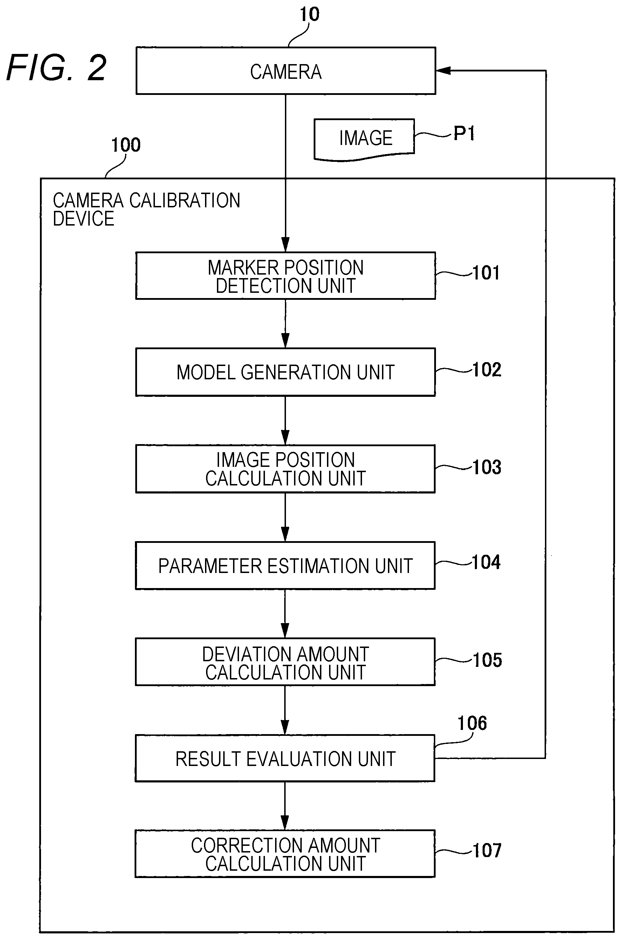

FIG. 2 is a block diagram illustrating a schematic configuration example of a camera calibration device 100 according to a first embodiment of the present invention. The camera calibration device 100 calibrates a camera 10 by executing a camera calibration method according to the first embodiment.

The camera calibration device 100 includes, for example, a marker position detection unit 101, a model generation unit 102, an image position calculation unit 103, a parameter estimation unit 104, a deviation amount calculation unit 105, a result evaluation unit 106, and a correction amount calculation unit 107.

The camera 10 includes a lens (not illustrated) and an image sensor. The camera 10 may be either a monocular camera or a stereo camera. Then, the camera 10 images an object with the image sensor through the lens to acquire an image P1. The image P1 is input to the camera calibration device 100 and used as an input image.

<Example of calibration chart>

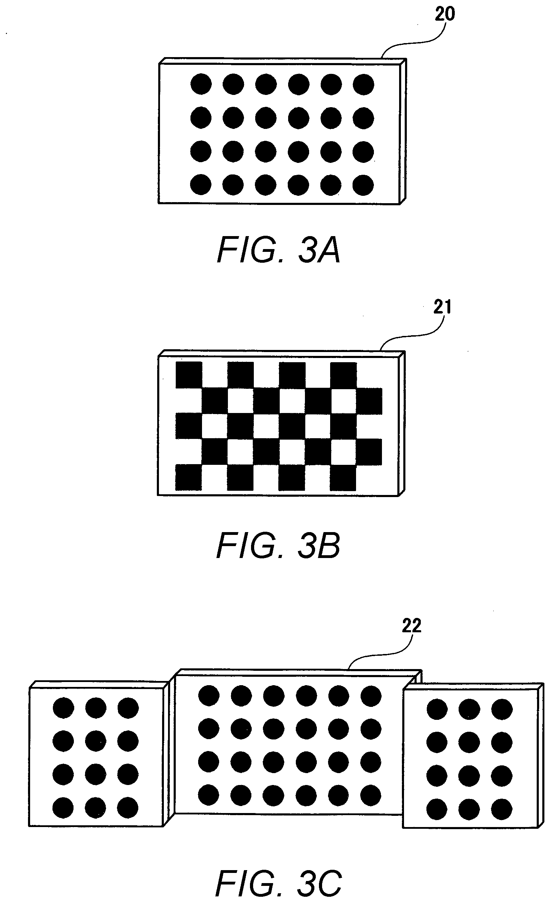

Here, a calibration chart, which is an example of the object imaged by the camera 10, will be described with reference to FIGS. 3A and 3B. The calibration object is at least one of a two-dimensional calibration chart or a three-dimensional calibration chart.

FIG. 3A is a perspective view illustrating an example of a two-dimensional calibration chart 20 in which circular markers are arranged.

FIG. 3B is a perspective view illustrating an example of a two-dimensional calibration chart 21 in which rectangular markers are arranged.

FIG. 3C is a perspective view illustrating an example of a three-dimensional calibration chart 22 in which circular markers are arranged.

The calibration chart has a configuration in which markers such as quadrangles and circles arranged at equal intervals are arranged two-dimensionally or three-dimensionally. In the following description, the calibration chart 20 is taken as an example.

The markers arranged in the calibration chart 20 are often arranged at equal intervals on a plane without deflection in order to simplify calculation used for calibration in the camera calibration device 100 or simplify manufacturing of the calibration chart 20. However, as long as the camera calibration device 100 can accurately identify a positional relationship of the markers in advance, there is no limitation on the interval and shape of the markers. An operator moves with the calibration chart 20. Then, the calibration chart 20 is imaged according to a position where the calibration chart 20 has moved.

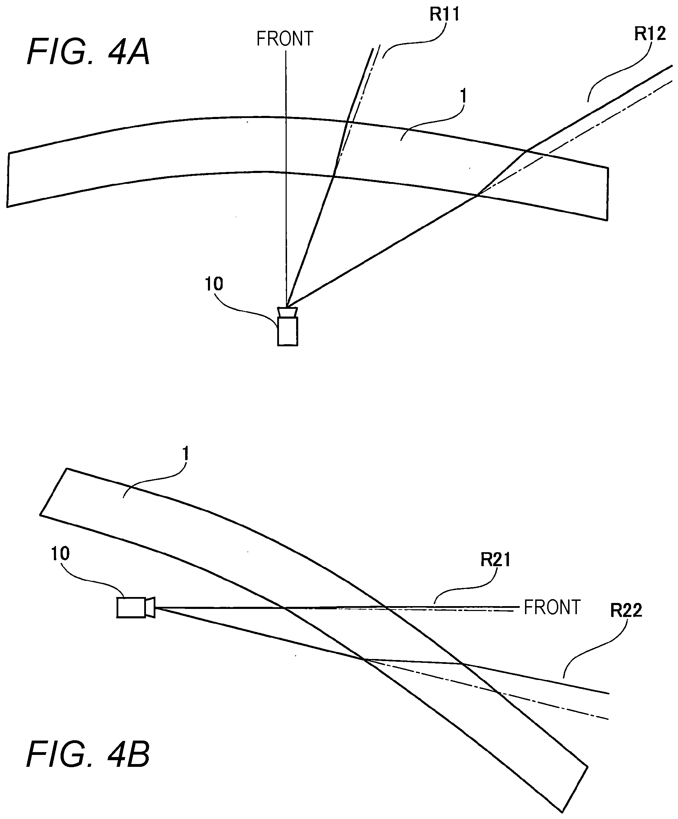

Next, an arrangement relationship between the refractive layer 1 and the camera 10 will be described with reference to FIGS. 4A and 4B. This calibration method includes processing in which the camera 10 images the calibration chart 20 through the refractive layer 1 to obtain the image P1. As the refractive layer 1, for example, a windshield of an automobile is assumed, but a rear glass of an automobile, a transparent resin part, or the like may be used.

<Relationship between refractive layer and light ray>

FIGS. 4A and 4B are schematic diagrams illustrating a relationship between the refractive layer 1 and a light ray. FIG. 4A is a horizontal cross-sectional view of the refractive layer 1 in a state where the camera 10 is mounted on the automobile. FIG. 4B is a vertical cross-sectional view of the refractive layer 1 in a state where the camera 10 is mounted on the automobile.

As illustrated in FIG. 4A, in a case where the refractive layer 1 is in front of the camera 10 and the front of the refractive layer 1 has a convex shape, an influence of the refractive layer 1 is small in a light ray R11 near a front surface. On the other hand, a light ray R12 incident on the camera 10 from a wide-angle portion in the horizontal direction is greatly affected by the refractive layer 1.

Similarly, also in FIG. 4B, in a case where the refractive layer 1 having a convex shape in the front is in front of the camera 10 and a near side of the refractive layer 1 is inclined in the direction of the camera 10, the influence of the refractive layer 1 is small in a light ray R21 near the front surface. On the other hand, a light ray R22 incident on the camera 10 from a lower part in the vertical direction is greatly affected by the refractive layer 1.

The description returns to FIG. 2.

The marker position detection unit 101 illustrated in FIG. 2 detects the marker of the calibration chart 20 appearing in the image P1.

Since it is not the essence of the present invention, detailed description will be omitted, but the marker position detection unit 101 has a function of detecting the marker of the calibration chart 20 appearing in the image P1 by using a method such as Hough transformation, corner detection, or luminance centroid calculation, and detecting a pixel at which the detected marker is located on the image P1, on a subpixel basis.

<Examples of pixel and subpixel>

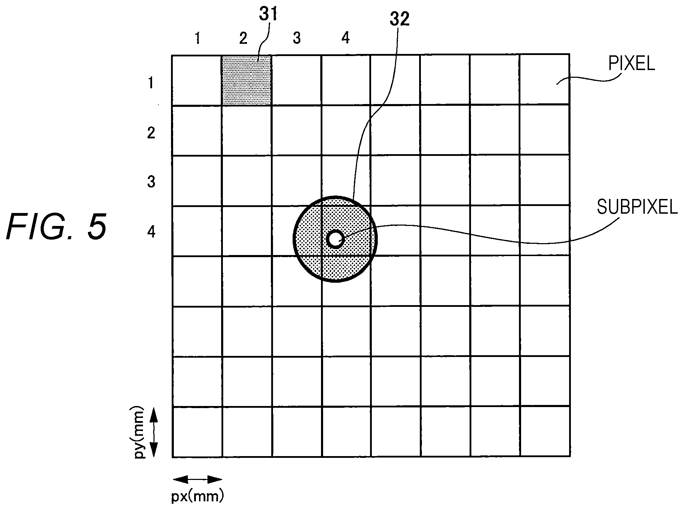

A subpixel is a pixel in a unit of one pixel or less, and the pixel of the image P1 has an integer value. Here, the subpixel will be described with reference to FIG. 5.

FIG. 5 is a diagram illustrating an example of the subpixel. FIG. 5 illustrates a state in which a plurality of pixels are arranged.

The pixels illustrated in FIG. 5 are arranged side by side in an X-axis direction and a Y-axis direction. The pixels are formed, for example, by multiple instances of a pixel 31 having position coordinates of (2,1). A length of the pixel 31 in the X-axis direction is px [mm], and a length in the Y-axis direction is py [mm].

Here, an example will be described in which an attention point 32 in the drawing is represented in pixel units and subpixel units. In the pixel units, the position coordinates of the attention point 32 are represented by (4,4). On the other hand, in the subpixel units, the position coordinates of the attention point 32 are represented by (3.2,3.8). As described above, in the subpixel units, the position coordinates of the attention point 32 are specified in more detail than in the pixel units.

The description returns to FIG. 2.

A model generation unit (model generation unit 102) illustrated in FIG. 2 performs modeling considering the refractive layer (refractive layer 1) on the basis of a weight set to each divided region of the image P1 and a plurality of images which are obtained by a camera (camera 10) imaging a calibration object and input to a deviation amount calculation unit (deviation amount calculation unit 105). Specifically, the model generation unit 102 has a function of modeling, for generation, internal parameters in the camera 10, lens distortion, a translation component and a rotation component of the calibration chart 20, and an approximate curved surface, a translation component, and a rotation component of the refractive layer 1. When the model generation unit 102 performs modeling, it is possible to obtain, by calculation, a position at which a three-dimensional point is theoretically arranged on the image. Thereafter, the result evaluation unit 106 to be described later evaluates a deviation amount between the calculated three-dimensional point and a point on the image P1 captured by the camera 10, thereby confirming a validity of the model and parameter settings and estimates. Here, the modeling regarding the refractive layer 1 performed by the model generation unit 102 will be described.

<Example of approximate curved surface and light ray displacement of refractive layer>

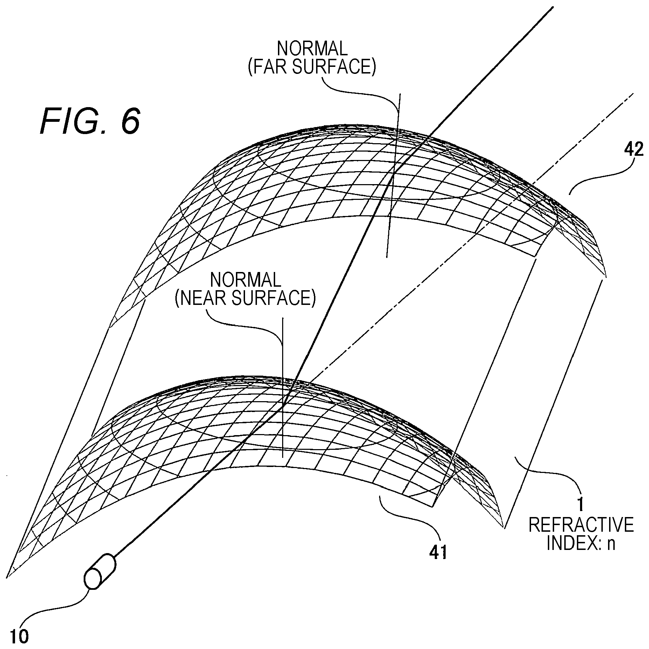

FIG. 6 is a diagram illustrating a state in which the model generation unit 102 obtains a light ray displacement from the modeled approximate curved surface of the refractive layer 1.

FIG. 6 illustrates a state in which the camera 10 images an object including the calibration chart 20 through the refractive layer 1. Here, a curved surface on the near side of the refractive layer 1 as viewed from the camera 10 is referred to as a near-side approximate curved surface 41, and a curved surface on a far side of the refractive layer 1 is referred to as a far-side approximate curved surface 42. Then, the refractive layer 1 is sandwiched between the near-side approximate curved surface 41 and the far-side approximate curved surface 42 with respect to the camera 10, and has a parameter of the refractive index n. Then, Z in a height direction with respect to an xy plane is represented by a function of x and y.

As an example of modeling the approximate curved surface, the model generation unit 102 approximates and models the curved surface of the refractive layer 1 with a second-order polynomial expressed by following Expression (1).
[Mathematical formula 1]

$$Z = p_{00} \\ + p_{10} * x + p_{01} \quad * y \\ + p_{20} * x^2 + p_{11} * x * y + p_{02} * y^2 \cdots (1)$$

In Expression (1), $p_{00}$, $p_{10}$, $p_{01}$, $p_{20}$, $p_{11}$, and $p_{02}$ are coefficients of respective terms, and $x^2$ and $y^2$ are square terms. Of the subscript numbers (for example, 10, 20) of each P in Expression (1), a front represents the order of x and a rear represents the order of y. Therefore, $p_{20}$ represents a coefficient of a term in which x is the second power and y is the 0 power. The near-side approximate curved surface 41 and the far-side approximate curved surface 42 expressed by Expression (1) have a translation component T and a rotation component R, and each curved surface is arranged with respect to the camera 10. However, a method of selecting variables in modeling is not limited to the method shown in Expression (1), and a higher-order polynomial (for example, a fifth-order polynomial expressed by Expression (6) to be described later) may be used.

The model generation unit 102 specifies, as an intersection point, a point at which a light ray emitted toward the refractive layer 1 with respect to the camera 10 is incident on the near-side approximate curved surface 41. Then, the model generation unit 102 obtains a normal (near surface) at the intersection point on the basis of Expression (1) of the modeled approximate curved surface, the translation component T, and the rotation component R with respect to the intersection point. Since the model generation unit 102 can identify the light ray incident on the near-side approximate curved surface 41, the intersection point, the normal, and the refractive index by modeling, an emission light ray can be obtained by substituting these pieces of information into the Snell's law expression.

In addition, the emission light ray of the near-side approximate curved surface 41 is regarded as a light ray incident on the far-side approximate curved surface 42. Then, similarly to the calculation for the near-side approximate curved surface 41, the model generation unit 102 performs processing of obtaining an emission light ray from the far-side approximate curved surface 42 according to Snell's law, thereby obtaining the emission light ray from the far-side approximate curved surface 42. The emission light ray is an emission light ray of the refractive layer 1. Then, the model generation unit 102 obtains a normal (far surface) at the intersection point on the basis of Expression (1) of the modeled approximate curved surface and the translation component T and the rotation component R.

As a result, the image position calculation unit 103 can calculate a position of the marker from a difference between a position of the marker appearing in the image P1 captured without the refractive layer 1 interposed therebetween (an emission light ray indicated by a one-dot chain line in the drawing) and a position of the marker appearing in the image P1 captured through the refractive layer 1 (an emission light ray indicated by a solid line in the drawing) .

<Example of approximate curved surface of refractive layer>

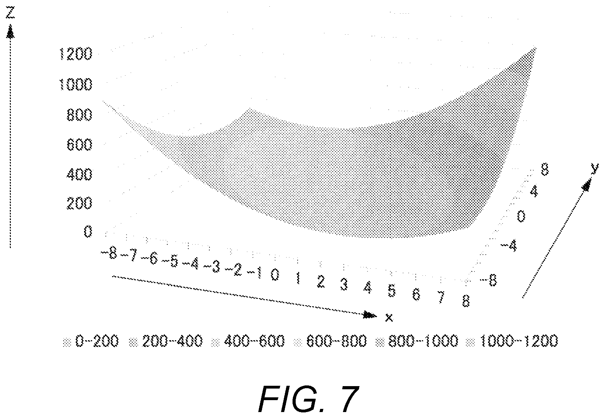

The refractive layer 1 the curved surface of which is approximated is expressed by following Expression (1) in FIG. 7.

FIG. 7 is a diagram illustrating an example of the refractive layer 1 in which the curved surface is approximated by a second-order polynomial.

Even when the refractive layer 1 has a complicated curved surface as illustrated in FIG. 7, it is possible to approximate the curved surface of the refractive layer 1 by Expression (1). In addition, it is also possible to express the refractive layer 1 in a plane by putting a specific numerical value in a coefficient p in Expression (1). Expression (1)' is expressed by putting a numerical value to the coefficient p of Expression (1).
[Mathematical formula 2]

$$Z = 1 + 2 * x + 3 * y + 4 * x^2 + 5 * x * y + 6 * y^2 \cdots (1)'$$

<Example of approximate plane of refractive layer>

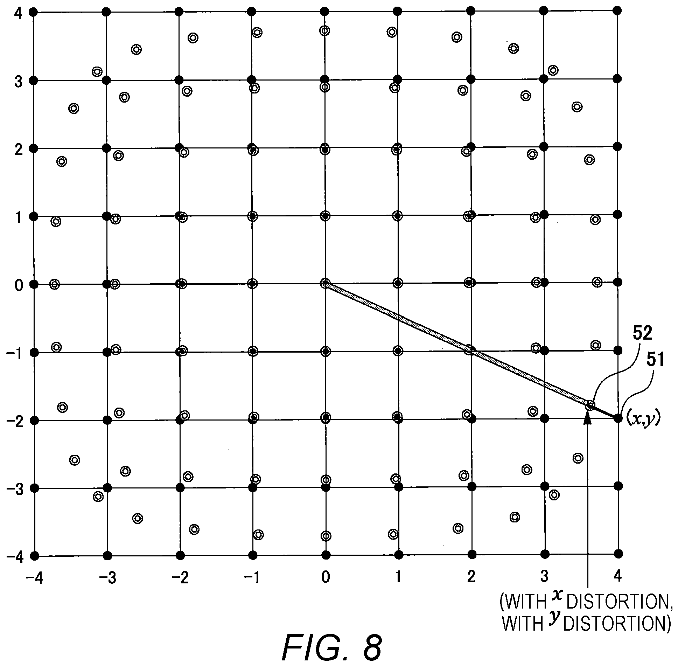

FIG. 8 is a diagram illustrating an example of the marker appearing in the image P1 obtained by imaging the calibration chart 20 in which black points 51 are arranged in a lattice shape.

A center of FIG. 8 is set to position coordinates of x = 0 and y = 0. Then, when imaged by the camera 10, the black point 51 having position coordinates of (4, -2) is shown at a position of a white point 52 by distortion of the refractive layer 1. Here, the position coordinates of the white point 52 are (with x distortion, with y distortion). As described above, the refractive layer 1 is represented by a plane, so that an influence of the distortion of the refractive layer 1 becomes clear.

The description returns to FIG. 2.

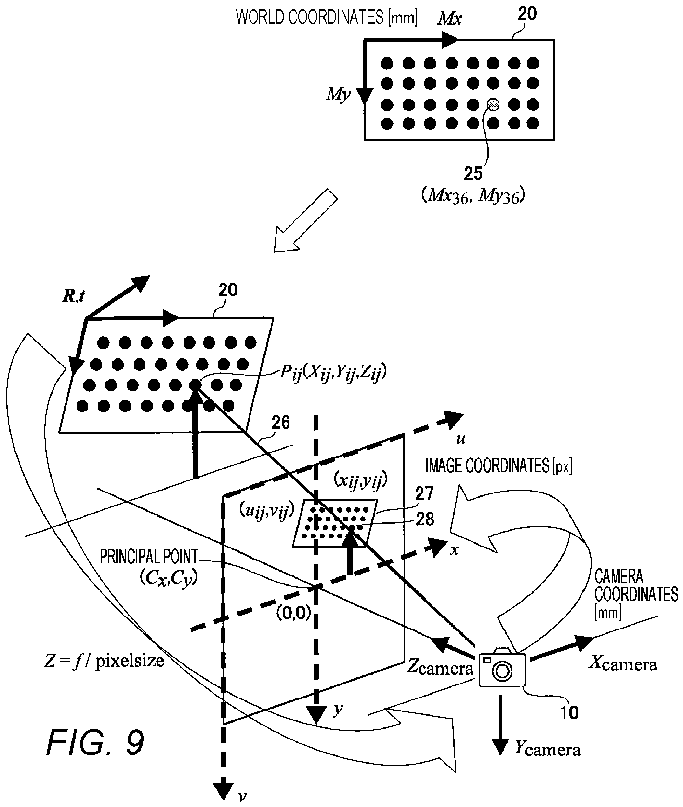

The image position calculation unit 103 illustrated in FIG. 2 converts the marker position of the calibration chart 20 in three dimensions into a position on the image. Here, processing of converting the marker position will be described with reference to FIGS. 9 to 11.

<Description of Zhang method>

FIG. 9 is a diagram illustrating a state when the calibration chart 20 is imaged by the camera 10. Here, the Zhang method of modeling the parameters of the camera 10 and considering the camera 10 as a pinhole camera will be described. By this method, an object in a world coordinate system is converted into an image in a camera coordinate system.

An example of the calibration chart 20 represented by world coordinates is illustrated on an upper side of FIG. 9. The world coordinates are a coordinate system used in a three-dimensional space of the real world, and the position of the marker is represented in millimeter units [mm].

In the calibration chart 20, a plurality of markers are arranged at equal intervals. In the world coordinates, the position coordinates of each marker represented by the black point in the calibration chart 20 are represented by row numbers and column numbers assigned to Mx and My with the upper left of the calibration chart 20 as an origin. For example, a marker 25 of the calibration chart 20 is located at a position of a third row and a sixth column of the world coordinates, the position coordinates are expressed as $(Mx_{36}, My_{36})$.

A lower side of FIG. 9 illustrates a state in which the calibration chart 20 is imaged by the camera 10. Here, a method of converting the marker position of the calibration chart on three dimensions into a position of image coordinates on the image is illustrated. The image coordinates are a coordinate system used in an image, and represent the position of the image in pixel units [px].

The calibration chart 20 is installed to be rotated or translated with respect to the camera 10. Here, rotation of the calibration chart 20 is represented as "R", and translation of the calibration chart 20 is represented as "t". Then, position coordinates of the marker 25 of the calibration chart 20 are represented as $Pi_j(X_{ij}, Y_{ij}, Z_{ij})$. A position of the camera 10 in camera coordinates is represented by (Xcamera,Ycamera,Zcamera). A unit of the camera coordinates is mm.

A position of an arbitrary point in the image P1 captured by the camera 10 is specified by image coordinates. Here, a position of an origin (0,0) of the image coordinates is set as an optical center through which a Z axis (Zcamera) indicating an optical axis of the camera 10 passes, and is referred to as a principal point (Cx,Cy). Then, the marker 25 of the calibration chart 20 imaged by the camera 10 is on a straight line 26 passing through the marker 28 of the calibration chart 27 appearing in the image P1. In addition, arbitrary position coordinates on the image coordinates are represented by $(x_{ij}, y_{ij})$. On the other hand, arbitrary position coordinates of the calibration chart 27 imaged through the refractive layer 1 are represented by $(u_{ij}, v_{ij})$ of uv coordinates in which a horizontal axis is u and a vertical axis is v.

In this regard, the model generation unit 102 models the distortion of the lens of the camera 10 and sets parameters used in following Expressions (2) and (3). Expression (2) represents a three-dimensional position at which the marker is arranged, by rotating (R) and translating (t) the coordinates $P_{ij}(X_{ij}, Y_{ij}, Z_{ij})$ indicating the positional relationship of the marker of the calibration chart 20.

The parameters of the calibration chart are as follows.

- Two-dimensional chart plane coordinates: $Mx_{ij}, My_{ij}$
- Rotation component: R
- Translation component: T

[Mathematical formula 3]

EXTERNAL PARAMETER

TWO-DIMENSIONAL CHART PLANE COORDINATES

$$\begin{bmatrix} X_{ij} \\ Y_{ij} \\ Z_{ij} \end{bmatrix} = \begin{bmatrix} R & t \end{bmatrix} \begin{bmatrix} Mx_{ij} \\ My_{ij} \\ 0 \\ 1 \end{bmatrix} = \begin{bmatrix} R_{11} & R_{12} & R_{13} & t_x \\ R_{21} & R_{22} & R_{23} & t_y \\ R_{31} & R_{32} & R_{33} & t_z \end{bmatrix} \begin{bmatrix} Mx_{ij} \\ My_{ij} \\ 0 \\ 1 \end{bmatrix} \cdots (2)$$

For example, a term denoted by an external parameter in Expression (2) represents the influence of the rotation (R) and the translation (t) on the calibration chart 20. In addition, a term denoted by two-dimensional chart plane coordinates in Expression (2) represents the position of the marker in the world coordinates illustrated on the upper side of FIG. 9.

Following Expression (3) is used to obtain a position at which the three-dimensional point $(X_{ij}, Y_{ij})$ obtained by Expression (2) appears in the image P1. Here, the coordinate system of the image P1 is also referred to as image coordinates.

[Mathematical formula 4]

IMAGE COORDINATES

INTERNAL PARAMETER

$$\begin{bmatrix} x_{ij} \\ y_{ij} \\ 1 \end{bmatrix} = \begin{bmatrix} f_x & s & c_x \\ 0 & f_y & c_y \\ 0 & 0 & 1 \end{bmatrix} \begin{bmatrix} \frac{X_{ij}}{Z_{ij}} \\ \frac{Y_{ij}}{Z_{ij}} \\ 1 \end{bmatrix} \cdots (3)$$

For example, a term denoted by image coordinates on a left side of Expression (3) represents the position in the image coordinates of the marker 28 of the calibration chart 27 appearing in the image P illustrated in FIG. 9. A term denoted by an internal parameter on a right side of Expression (3) represents a camera parameter. The camera parameter is as follows.

- Focal length: f
- Focal length in x direction: $f_x$
- Focal length in y direction: $f_y$
- Coordinates of optical center (principal point): $c_x, c_y$
- Pixel size: $p_x, p_y$
- Shear coefficient: s

Here, $f_x = f/p_x$ and $f_y = f/p_y$.

Pixel sizes px and py represent sizes of pixels.

In addition, a shear coefficient s represents a value obtained by a predetermined expression $(f_x \tan\alpha)$ from an inclination $\alpha$ of the pixel of a CMOS sensor which is an image receiving unit of the camera.

With such an expression, the position of the marker that can be imaged by the camera 10 without passing through the refractive layer 1 can be obtained from the image captured by the camera 10 through the refractive layer 1. As an example of the lens distortion model of the camera generated by the model generation unit 102, following Expression (4) is shown.

[Mathematical formula 5]

$$\begin{cases} \text{with } x \atop \text{distortion} = x(1 + k_1 r^2 + k_2 r^4 + k_3 r^6) + [2p_1 xy + p_2(r^2 + 2x^2)] \\[2mm] \text{with } y \atop \text{distortion} = y(1 + k_1 r^2 + k_2 r^4 + k_3 r^6) + [p_1(r^2 + 2y^2) + 2p_2 xy] \\[2mm] r^2 = x^2 + y^2 \qquad\qquad\qquad\qquad\qquad \cdots(4) \end{cases}$$

p1 and p2 in Expression (4) represent coefficients in the lens distortion model. In addition, x and y in Expression (4) represent coordinates on an image in a case where a camera without distortion (pinhole camera) is used. Actually, a deviation occurs in the x coordinate and the y coordinate due to the distortion of the lens of the camera 10. The coordinates at this time are represented as (with x distortion, with y distortion).

The image position calculation unit 103 sets each parameter for the model of the refractive layer 1 and the lens distortion generated by the model generation unit 102, thereby converting each marker position on the calibration chart 20 into a position on the image by calculation.

<Relationship between detection position and calculation position of marker>

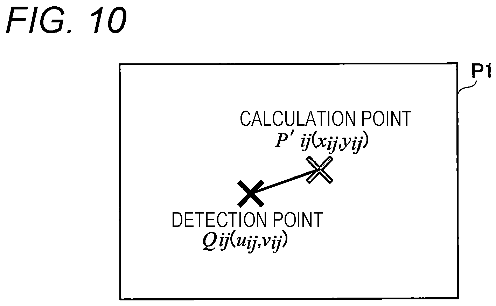

FIG. 10 is a diagram illustrating a relationship between a detection position and a calculation position of the marker of the calibration chart 20 appearing in the image. In FIG. 10, the position of the marker of the calibration chart 20 is represented by "X".

The position of the marker of the calibration chart 20 imaged by the camera 10 is represented as a detection position $Q_{ij}(u_{ij}, v_{ij})$ in the image P1 illustrated in FIG. 10. On the other hand, the image position calculation unit 103 illustrated in FIG. 2 calculates the position of the marker on the basis of Expressions (2) and (3) to obtain a calculation position $P'_{ij}$ $(x_{ij}, y_{ij})$. Then, the image position calculation unit 103 calculates the calculation positions $P'_{ij}(x_{ij}, y_{ij})$ for all the markers of the calibration chart 20.

The parameter estimation unit 104 compares the detection result of the marker detected from the image P1 by the marker position detection unit 101 with the calculation result of the marker calculated by the image position calculation unit 103, and calculates a deviation amount of the marker. Then, the parameter estimation unit 104 estimates a parameter that minimizes the deviation amount. When the parameter estimation unit 104 estimates the parameter, following Expression (5) is used.

[Mathematical formula 6]

$$S(\boldsymbol{Rt}) = \sum_{i,j} \left\| Q_{ij} - P'_{ij} \right\| \quad \cdots(5)$$

$Q_{ij}$ and $P'_{ij}$ in Expression (5) represent following position coordinates.

- Position coordinates of marker detected by marker position detection unit 101: $Q_{ij}(u_{ij}, v_{ij})$
- Position coordinates of marker calculated by image position calculation unit 103: $P'_{ij}(x_{ij}, y_{ij})$

S(Rt) in Expression (5) is a sum of distances between all the detected points and all the calculated points. Then, the parameter estimation unit 104 estimates a parameter that minimizes the sum of the distances between the detection positions and the calculation positions.

The correction amount calculation unit 107 illustrated in FIG. 2 has a function of creating a correction table (not illustrated) indicating a position at which the point on the image P1 appears in a case where there is no influence of the distortion of the refractive layer 1 or the lens, from each parameter value obtained by the model generation unit 102 and the parameter estimation unit 104. This correction table is used to simultaneously perform geometric correction for correcting the distortion of the lens and correction of the influence of the refractive layer 1 on the image by using only the image P1 captured through the refractive layer 1.

The deviation amount calculation unit 105 has a function of dividing the image P1 into several regions and calculating how much the deviation amount occurs for each of the regions depending on the presence or absence of distortion of the refractive layer 1 or the lens. It is desirable that the divided regions have the same size. Therefore, the deviation amount calculation unit (deviation amount calculation unit 105) calculates the deviation amount between the detection position of the object detected for each region of a predetermined size of the image obtained by imaging the calibration object by the camera (camera 10) through the refractive layer (refractive layer 1) and the calculation position of the object calculated for each region of the image that can be captured by the camera (camera 10) without passing through the refractive layer (refractive layer 1) .

<Example of calculating deviation amount>

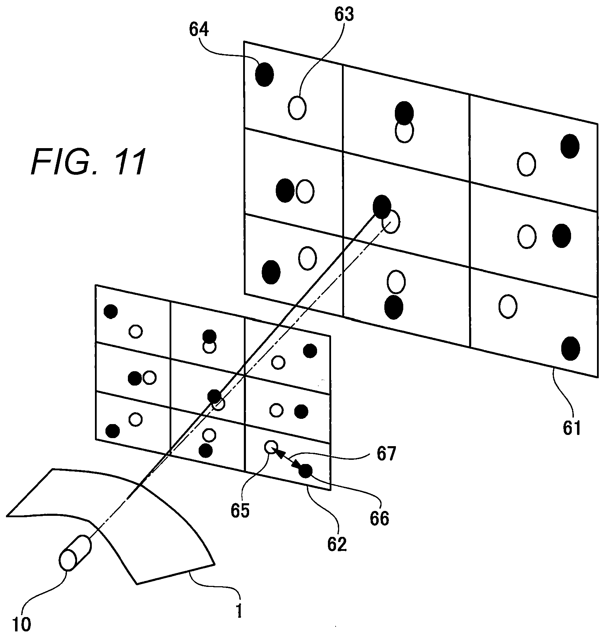

Here, a state in which the image P1 is divided and the deviation amount is calculated will be described with reference to FIG. 11.

FIG. 11 is a diagram illustrating the deviation amount for each region obtained by dividing the image P1. The image P1 is divided at equal intervals vertically and at equal intervals horizontally. The deviation amount calculation unit (deviation amount calculation unit 105) calculates the calculation position of the object by using a calculation formula of the modeled refractive layer (refractive layer 1) .

A surface facing a lens surface of the camera 10 at an appropriate distance in front of the camera 10 is defined as an infinite plane 61. On the infinite plane 61, a rectangular region is illustrated in accordance with the size of the region obtained by dividing the image P1. As an example, a white point 63 passing through a center of each region is set. The deviation amount calculation unit 105 obtains a black point 64 affected by the distortion of the refractive layer 1 or the lens, corresponding to the white point 63 set in each region.

Next, the deviation amount calculation unit 105 obtains, by calculation, where the white point 63 and the black point 64 on the infinite plane 61 are located on the image coordinates 62. In the image coordinates 62, a white point 65 and a black point 66 corresponding to the white point 63 and the black point 64 on infinite plane 61 are shown. Then, the deviation amount calculation unit 105 obtains a distance "deviation amount 67" between the white point 65 and the black point 66 for each region.

An evaluation unit (result evaluation unit 106) evaluates the deviation amount (deviation amount 67) for each region calculated by the deviation amount calculation unit 105. Here, the evaluation unit (result evaluation unit 106) sets a weight for each region, and evaluates, for each region, whether or not the calculation of the deviation amount according to the weight has been performed. Then, if the calculation of the deviation amount according to the weight has not been performed, the evaluation unit (result evaluation unit 106) gives an instruction to calculate the deviation amount according to the weight. On the other hand, if the calculation of the deviation amount according to the weight has been performed, the evaluation unit (result evaluation unit 106) outputs the deviation amount to the correction amount calculation unit. For example, if the evaluation result of the deviation amount is defective, the result evaluation unit 106 instructs the camera 10 to recapture an image of the calibration chart 20 or outputs a message prompting movement of the calibration chart 20.

As illustrated in FIGS. 4A and 4B, on the premise that the camera 10 is mounted in a general passenger car, it is assumed that the refractive layer 1 (for example, a windshield) in front of the camera 10 is inclined by about 30 degrees, and the camera 10 is installed at a center. The deviation amount for each region calculated by the deviation amount calculation unit 105 varies depending on the position of the region in the image P1.

For example, in a case where the marker is out of focus and the marker appears blurred, or in a case where the position of the calibration chart 20 is inappropriate to cause reflected light of the calibration chart 20 to be captured, the deviation amount calculation unit 105 cannot accurately obtain the deviation amount, and the result evaluation unit 106 evaluates the evaluation result of the deviation amount as defective. Therefore, the result evaluation unit 106 can instruct the camera 10 to recapture an image of the calibration chart 20 or can instruct a calibration operator to display the message prompting movement of the calibration chart 20.

In addition, it is assumed that the deviation amount of the region at the four corners, the wide-angle portion, and the right and left lower parts of the image P1 captured by the camera 10 is larger than the deviation amount of the region at the central part and the upper part of the image P1. In this regard, the result evaluation unit 106 can weight the region where the deviation amount becomes large. Then, as described in an embodiment to be described later, for the weighted region, the camera 10 can be instructed to increase the number of images P1 in the region to be input to the deviation amount calculation unit 105 or change the calculation formula.

If the evaluation result of the deviation amount by the result evaluation unit 106 is excellent, a correction amount for correcting the detection position of the object to the calculation position of the object is calculated for each region according to the evaluation result of the deviation amount, and the camera (camera 10) is calibrated on the basis of the correction amount of the deviation amount calculated for each region. For example, the correction amount calculation unit 107 calculates a correction amount for moving the deviated black point 66 of the image coordinates 62 to the position of the white point 65 at the center of each region, according to the deviation amount 67 calculated by the deviation amount calculation unit 105. After the correction amount is calculated, the camera 10 is calibrated by performing processing of correcting the position of the image captured by the camera 10 for each region with the calculated correction amount. Therefore, the image output from the camera calibration device 100 is input to an environment recognition device (not illustrated) or the like at a subsequent stage in a state where the influence of the refractive layer 1 is removed, and is used for environment recognition around the automobile.

<Example of camera calibration method according to first embodiment>

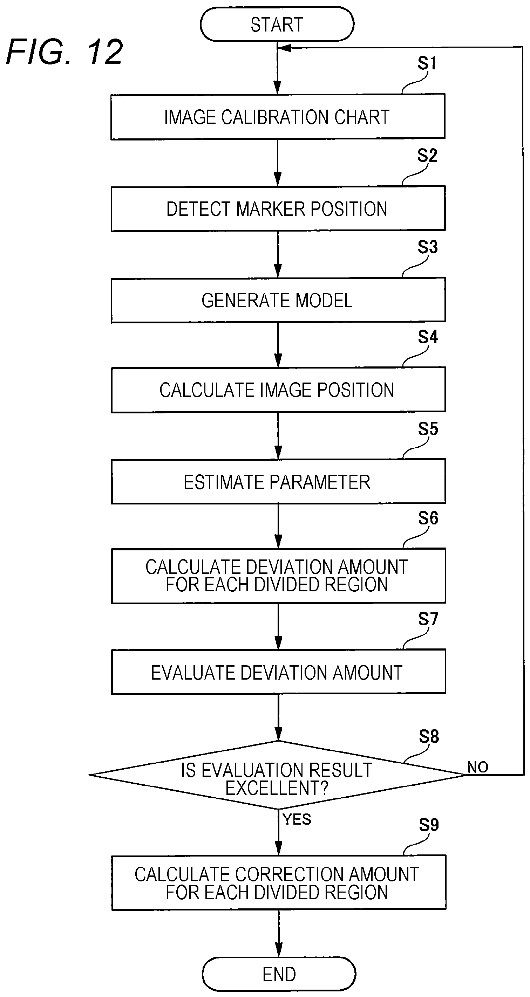

Next, the camera calibration method according to the first embodiment performed by the camera calibration device 100 will be described with reference to FIG. 12.

FIG. 12 is a flowchart illustrating an example of the camera calibration method according to the first embodiment.

First, the camera calibration device 100 images the calibration chart 20 through the refractive layer 1 (S1). Next, the marker position detection unit 101 detects a position of a marker from the image P1 output from the camera 10 (S2). Next, the model generation unit 102 generates the above-described model (S3).

Next, the image position calculation unit 103 calculates an image position from the position of each marker on the calibration chart (S4). The parameter estimation unit 104 estimates a parameter that minimizes a sum of distances between the detection positions and the calculation positions of the markers (S5).

Next, the deviation amount calculation unit 105 calculates a deviation amount for each region obtained by dividing the image P1 (S6). The result evaluation unit 106 evaluates the deviation amount for each of the divided regions (S7). Then, the result evaluation unit 106 determines whether or not an evaluation result is excellent (S8). If the evaluation result is not excellent (NO in S8), the result evaluation unit 106 instructs the camera 10 to recapture an image of the calibration chart 20, and the processing returns to step S1. if the evaluation result is excellent (YES in S8), the correction amount calculation unit 107 calculates a correction amount for each divided region (S9), and ends the present processing.

<Hardware configuration example of computer>

Next, a hardware configuration of a computer 70 constituting the camera calibration device 100 will be described.

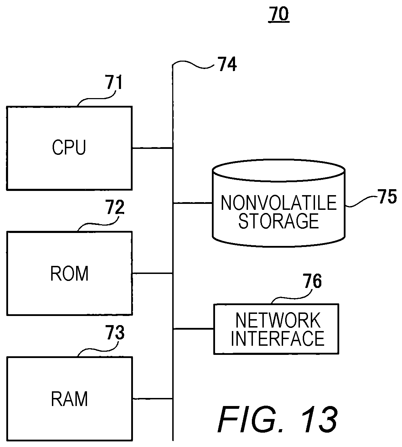

FIG. 13 is a block diagram illustrating the hardware configuration example of the computer 70. The computer 70 is an example of hardware used as a computer operable as the camera calibration device 100 according to the present embodiment. The camera calibration device 100 according to the present embodiment implements a camera calibration method which the functional blocks of the camera calibration device 100 illustrated in FIG. 2 perform in cooperation with each other by the computer 70 (computer) executing a program.

The computer 70 includes a central processing unit (CPU) 71, a read only memory (ROM) 72, and a random access memory (RAM) 73 each connected to a bus 74. Further, the computer 70 further includes a nonvolatile storage 75 and a network interface 76.

The CPU 71 reads, from the ROM 72, a program code of software for realizing each function according to the present embodiment, loads the program code into the RAM 73, and executes the program code. Variables, parameters, and the like generated during arithmetic processing of the CPU 71 are temporarily written to the RAM 73, and these variables, parameters, and the like are appropriately read by the CPU 71. However, a micro processing unit (MPU) may be used instead of the CPU 71, or the CPU 71 and a graphics processing unit (GPU) may be used in combination. The function of each unit of the camera calibration device 100 illustrated in FIG. 2 is realized by the CPU 71.

As the nonvolatile storage 75, for example, a hard disk drive (HDD), a solid state drive (SSD), a flexible disk, an optical disk, a magneto-optical disk, a CD-ROM, a CD-R, a magnetic tape, a nonvolatile memory, or the like is used. In addition to an operating system (OS) and various parameters, a program for causing the computer 70 to function is recorded in the nonvolatile storage 75. The ROM 72 and the nonvolatile storage 75 record programs, data, and the like necessary for the operation of the CPU 71, and are used as an example of a computer-readable non-transitory storage medium having stored thereon a program executed by the computer 70. For example, the image P1 is stored in the nonvolatile storage 75. In addition, the model generated by the model generation unit 102, the parameter estimated by the parameter estimation unit 104, the deviation amount calculated by the deviation amount calculation unit 105, the evaluation result of the deviation amount evaluated by the result evaluation unit 106, and the correction amount calculated by the correction amount calculation unit 107 are stored in the nonvolatile storage 75.

For example, a network interface card (NIC) or the like is used as the network interface 76, and various data can be transmitted and received between devices through an in-vehicle local area network (LAN), a dedicated line, or the like connected to a terminal of the NIC.

In the camera calibration device 100 according to the first embodiment described above, the marker position is detected from the image of the calibration chart 20 captured by the camera 10 through the refractive layer 1, to generate the model. Then, the camera calibration device 100 calculates the position of the marker on the image and estimates the parameter that minimizes the deviation amount between the detection position and the calculation position of the marker, thereby creating the correction table capable of correcting the position at which the point on the image P1 appears in a case where there is no influence by the distortion of the refractive layer 1 or the lens. As a result, the position of the object appearing in the image P1 captured by the camera 10 is converted to a position not affected by the distortion of the refractive layer 1 or the lens by using the correction table, so that the environment recognition device or the like can accurately identify the position of the object.

In addition, the image P1 input to the camera calibration device 100 from a camera capable of imaging at a wider angle than that of a conventional camera is used, for example, to detect a pedestrian when the automobile turns right or left at an intersection. Even in this case, by using the camera calibration method according to the first embodiment, it is possible to reliably detect the pedestrian by suppressing the influence of the deviation of the image of the refractive layer in the wide-angle portion.

Therefore, in the monocular camera or the stereo camera, a geometric image can be corrected only by using at least one calibration chart 20 without depending on dedicated equipment or a place. In addition, the correction amount of the image P1 is calculated, so that it is also possible to provide an imaging device and an image correction device capable of simulating a situation without the refractive layer 1 using the image P1 captured through the refractive layer 1.

[Second Embodiment]

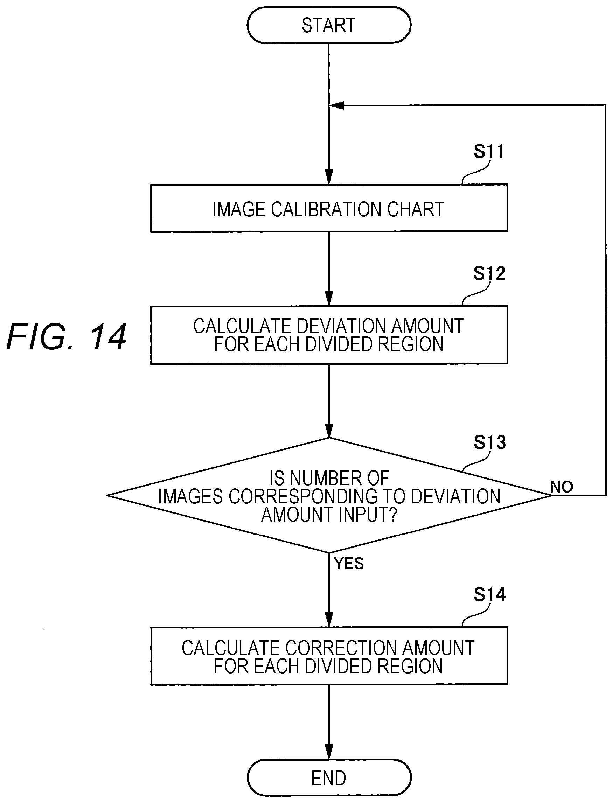

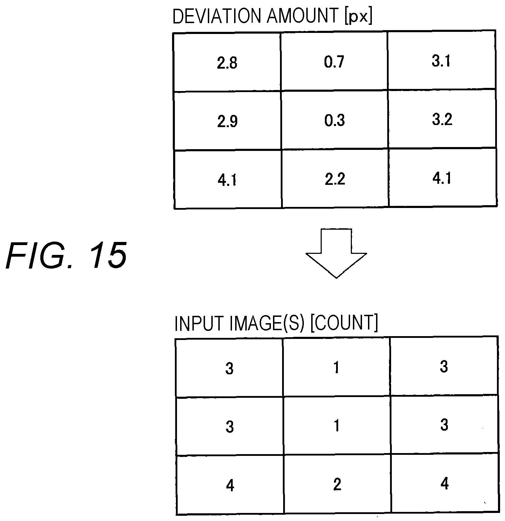

Next, a camera calibration method according to a second embodiment of the present invention performed by the camera calibration device 100 will be described with reference to FIGS. 14 and 15.

A configuration of the camera calibration device 100 according to the second embodiment may be similar to the configuration of the camera calibration device 100 according to the first embodiment. The camera calibration device 100 according to the second embodiment calibrates the camera 10 by changing the number of images P1 input from the camera 10 according to the deviation amount for each region calculated by the deviation amount calculation unit 105. For example, in a case where the configuration of the camera 10 is performed using the calibration chart 20 in a wide range, the entire range cannot be covered only by a single capture, so it is necessary to input a plurality of images P1 captured at different positions.

<Example of camera calibration method according to second embodiment>

FIG. 14 is a flowchart illustrating an example of the camera calibration method according to the second embodiment. Note that, in the flowchart illustrated in FIG. 14, it is assumed that the marker position detection (S2), the model generation (S3), the image position calculation (S4), and the parameter estimation (S5) among the steps of the flowchart of the camera calibration method according to the first embodiment illustrated in FIG. 12 have already been performed, and a detailed description thereof will be omitted.

First, the camera 10 images the calibration chart 20 (S11). Next, the deviation amount calculation unit 105 calculates a deviation amount for each of the divided regions (S12). Next, the result evaluation unit 106 evaluates whether or not the number of images P1, corresponding to the deviation amount, has been input (S13). If the calculation of the deviation amount according to the weight has not been performed, the evaluation unit (result evaluation unit 106) gives an instruction to change the number of images input to the deviation amount calculation unit (deviation amount calculation unit 105) for each region according to the weight set for the region. This instruction is input to the camera 10, so that the camera 10 recaptures an image of the calibration chart 20. Thereafter, the recaptured image P1 is input to the deviation amount calculation unit 105, and the deviation amount is calculated with the number of images P1 set in the region.

For example, if the refractive layer 1 is arranged substantially perpendicularly to the light ray of the camera 10, the result evaluation unit 106 sets weights for regions in the vicinity (lower left and right parts) of the image P1 and gives an instruction to increase the number of images P1. Similarly, if the refractive layer 1 is arranged to be inclined with respect to the light ray of the camera 10, a weight is set for the lower region of the image P1, and the instruction to increase the number of images P1 is given. In addition, if the camera 10 is arranged to be biased to the left side or the right side, the result evaluation unit 106 sets a weight for a region of the image P1 on the side opposite to the position where the camera 10 is arranged, and gives the instruction to increase the number of images P1.

If the result evaluation unit 106 evaluates that the number of images P1, corresponding to the deviation amount, has not been input (NO in S13), the processing returns to S11 again, and the processing is repeated until the number of images P1, corresponding to the deviation amount, is input.

On the other hand, if the result evaluation unit 106 evaluates that the number of images P1, corresponding to the deviation amount, has been input (YES in S13), the correction amount calculation unit 107 calculates a correction amount for each of the divided regions (S14), and ends the present processing.

FIG. 15 is a diagram illustrating a state in which the number of input images, corresponding to the deviation amount, is designated. An upper part of FIG. 15 illustrates the deviation amount [px] for each divided region, and the upper part of FIG. 15 illustrates the number of input images (images P1) required for each divided region.

The result evaluation unit 106 obtains a relatively necessary number of input images according to the deviation amount in each region. The minimum number of input images is one. For example, if the deviation amount is less than 1.0, the number of input images is one. On the other hand, if the deviation amount is 1.0 or more and less than 3.0, the number of input images is two, if the deviation amount is 3.0 or more and less than 4.0, the number of input images is three, and if the deviation amount is 4.0 or more, the number of input images is four.

Here, a necessary condition is that an image includes a determined number of markers of the calibration chart 20 in each region. For example, the operator changes the inclination of the calibration chart 20, the camera 10 images the calibration chart 20 multiple times, and a large number of input images are input, so that an accuracy of the correction amount for each region obtained by dividing the image P1 is improved. As a result, the camera calibration device 100 can also improve an accuracy of the calibration of the camera 10.

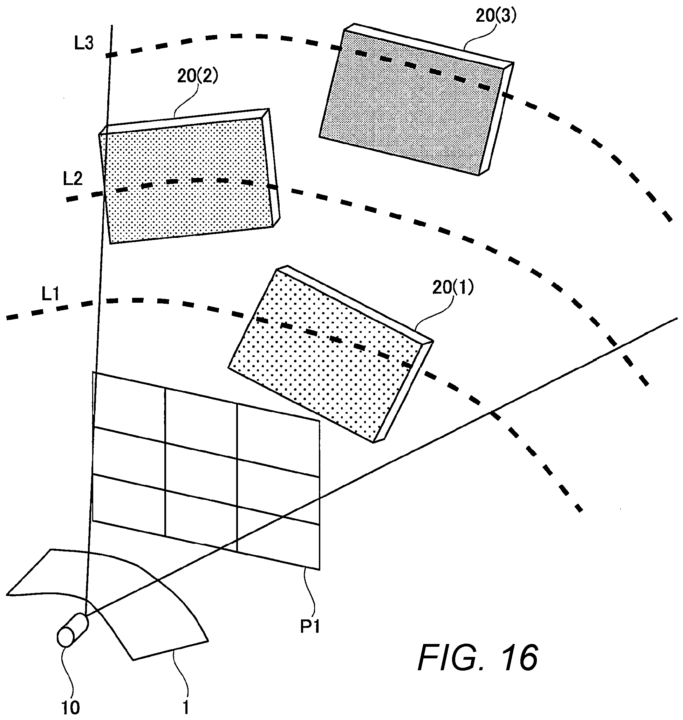

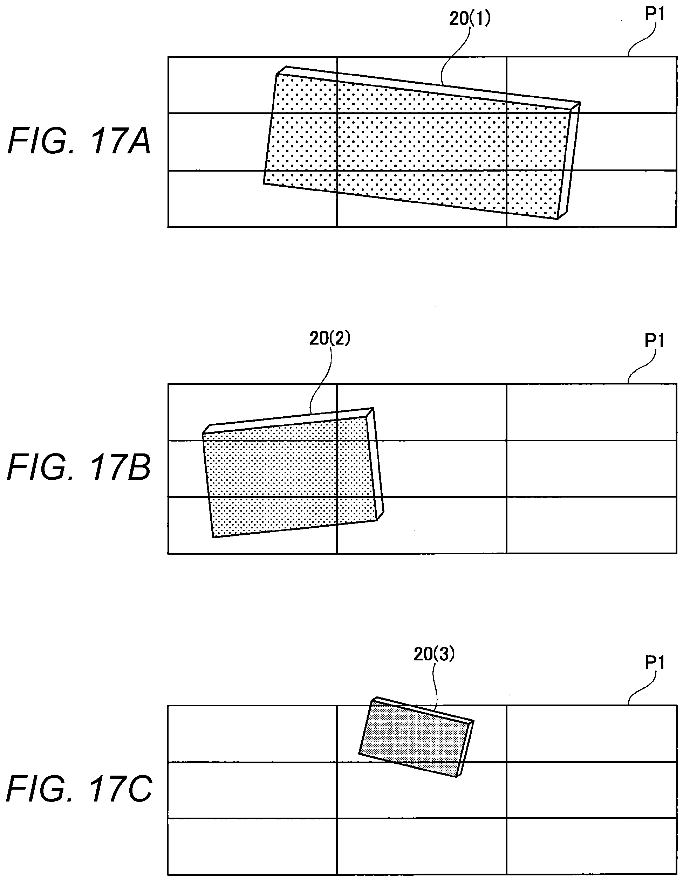

Here, a state in which images are captured while changing the position of the calibration chart 20 will be described with reference to FIGS. 16 and 17A to 17C.

FIG. 16 is a diagram illustrating a position where the calibration chart 20 is installed.

The calibration chart 20 is installed so as to fall within a range of the angle of view of the camera 10. Here, it is assumed that a calibration chart 20(1) is arranged at a position of a distance L1 closest to the camera 10, a calibration chart 20(2) is arranged next at a position of a distance L2 closest to the camera 10, and a calibration chart 20(3) is arranged at a position of a distance L3 farthest from the camera 10. In addition, it is assumed that the image P1 captured by the camera 10 is equally divided into nine regions.

FIG. 17A is a diagram illustrating the position of the calibration chart 20(1) appearing in the entire image P1.

The calibration chart 20(1) illustrated in FIG. 17A is imaged over the entire nine divided regions of the image P1. However, since a range in which the calibration chart 20(1) appears is small on the left side and the upper side of the image P1, markers of the calibration chart 20(1) are insufficient. In this regard, the result evaluation unit 106 instructs the camera 10 on the position of the calibration chart 20.

FIG. 17B is a diagram illustrating the position of the calibration chart 20(2) appearing closer to the left side of the image P1.

The calibration chart 20(2) illustrated in FIG. 17B is imaged with a shift toward the left side of the image P1. Therefore, the markers of the calibration chart 20(1), which have been insufficient on the left side of the image P1 illustrated in FIG. 17A, appear in a sufficient amount.

FIG. 17C is a diagram illustrating the position of the calibration chart 20(3) appearing closer to the upper side of the image P1.

The calibration chart 20(3) illustrated in FIG. 17C is imaged with a shift toward the upper side of the image P1. Therefore, the markers of the calibration chart 20(1), which have been insufficient on the upper side of the image P1 illustrated in FIG. 17A, appear in a sufficient amount.

By variously changing the position and inclination of one calibration chart 20 in this manner, the markers of the calibration chart 20 uniformly appear in the image P1. Therefore, compared to the camera calibration method according to the first embodiment, the correction amount calculation unit 107 can calculate the correction amount of the region deviation more accurately by using the position of the marker detected from each image P1 the marker position detection unit 101.

[Third Embodiment]

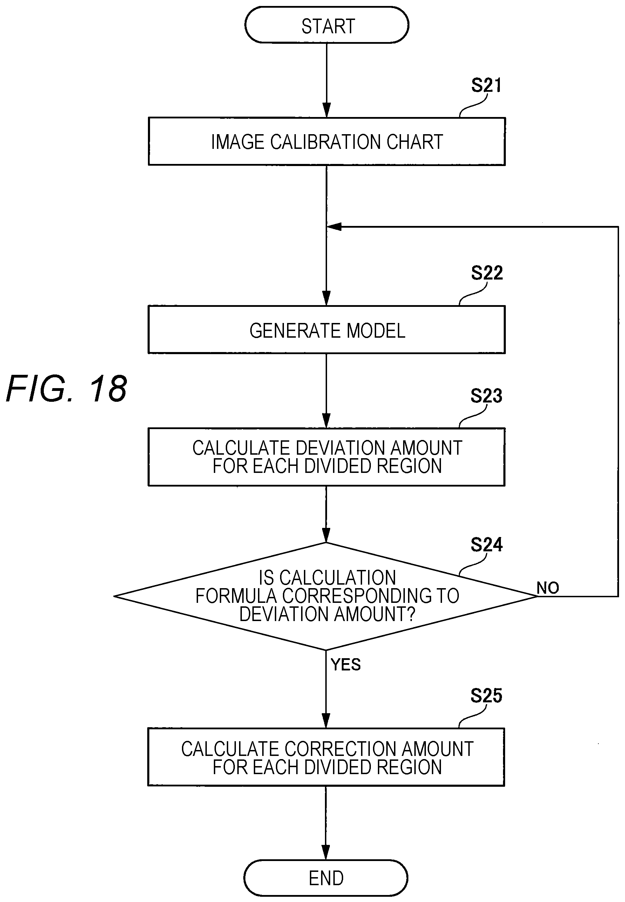

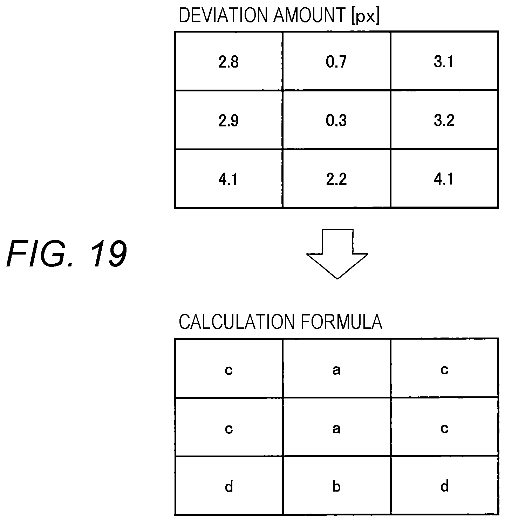

Next, a camera calibration method according to a third embodiment of the present invention performed by the camera calibration device 100 will be described with reference to FIGS. 18 and 19.

A configuration of the camera calibration device 100 according to the third embodiment may be similar to the configuration of the camera calibration device 100 according to the first embodiment. The camera calibration device 100 according to the third embodiment calibrates the camera 10 by changing the calculation formula according to the deviation amount for each region obtained by the deviation amount calculation unit 105. The calculation formula before the change may be above Expression (1), above Expression (4), or both.

As a specific example, it is assumed that the calculation formula representing at least one of the near-side approximate curved surface 41 or the far-side approximate curved surface 42 illustrated in FIG. 6 is changed to following Expression (6). For example, the deviation amount calculation unit 105 can change the approximate curved surface of the model shown in Expression (4) to following Expression (6).

[Mathematical formula 7]

$$Z = p_{00}$$
$$+p_{10}*x + p_{01} * y$$
$$+p_{20}*x^2 + p_{11}*x*y + p_{02} * y^2$$
$$+p_{30}*x^3 + p_{21}*x^2*y + p_{12}*x*y^2 + p_{03} * y^3$$
$$+p_{40}*x^4 + p_{31}*x^3*y + p_{22}*x^2*y^2 + p_{13}*x*y^3 + p_{04}*y^4 \cdots(6)$$
$$+p_{50}*x^5 + p_{41}*x^4*y + p_{32}*x^3*y^2 + p_{23}*x^2*y^3$$
$$+p_{14}*x*y^4 + p_{05}*y^5$$

Similarly, for the distortion model of the lens, the deviation amount calculation unit 105 may change the order of the distortion model, or may change the distortion model to a model combined with another approximate curved surface. Following Expression (7) is an example of another model that can be changed by the deviation amount calculation unit 105.

[Mathematical formula 8]

$$\left\{ \begin{bmatrix} \text{with } x \\ \text{distortion} \\ \text{with } y \\ \text{distortion} \end{bmatrix} = \begin{bmatrix} x\dfrac{1+k_1r^2+k_2r^4+k_3r^6}{1+k_4r^2+k_5r^4+k_6r^6} + 2p_1xy + p_2(r^2+2x^2) + s_1r^2 + s_2r^4 \\ y\dfrac{1+k_1r^2+k_2r^4+k_3r^6}{1+k_4r^2+k_5r^4+k_6r^6} + p_1(r^2+2y^2) + 2p_2xy + s_3r^2 + s_4r^4 \end{bmatrix} \\ r^2 = x^2 + y^2 \quad\quad\quad\quad\quad\quad\quad\quad\quad\quad\quad\quad\quad\cdots(7) \right.$$

<Example of camera calibration method according to third embodiment>

FIG. 18 is a flowchart illustrating an example of the camera calibration method according to the third embodiment. Note that, in the flowchart illustrated in FIG. 18, it is assumed that the marker position detection (S2), the image position calculation (S4), and the parameter estimation (S5) among the steps of the flowchart of the camera calibration method according to the first embodiment illustrated in FIG. 12 have already been performed, and a detailed description thereof will be omitted.

First, the camera 10 images the calibration chart 20 (S21). Next, the model generation unit 102 generates a model, that is, generates a calculation formula (S22).

Next, the deviation amount calculation unit 105 calculates a deviation amount for each of the divided regions (S23). Next, the result evaluation unit 106 evaluates whether or not the calculation formula corresponds to the deviation amount (S24). If the calculation of the deviation amount according to the weight has not been performed, the evaluation unit (result evaluation unit 106) gives an instruction to change the calculation formula for the deviation amount calculation unit (deviation amount calculation unit 105) to calculate the deviation amount for each region, according to the weight set for the region. This instruction is input to the camera 10, and is input to the deviation amount calculation unit 105 through the camera 10. Then, the deviation amount calculation unit 105 recalculates the deviation amount in the region for which the change of the calculation formula is instructed, by using the calculation formula changed according to the instruction.

For example, if the refractive layer 1 is arranged substantially perpendicularly to the light ray of the camera 10, the result evaluation unit 106 sets weights for regions in the vicinity (lower left and right parts) of the image P1 and gives an instruction to generate a calculation formula corresponding to the weight. Similarly, if the refractive layer 1 is arranged to be inclined with respect to the light ray of the camera 10, a weight is set for the lower region of the image P1, and the instruction to generate the calculation formula corresponding to the weight is given. In addition, if the camera 10 is arranged to be biased to the left side or the right side, the result evaluation unit 106 sets a weight for a region of the image P1 on the side opposite to the position where the camera 10 is arranged, and gives the instruction to generate the calculation formula corresponding to the weight.

if the result evaluation unit 106 evaluates that the calculation formula does not correspond to the deviation amount (NO in S 24), the processing returns to S22 again, and the model generation is repeated until the calculation formula corresponding to the deviation amount is generated. Then, the deviation amount calculation unit 105 calculates the deviation amount by using the calculation formula corresponding to the deviation amount.

On the other hand, if the result evaluation unit 106 evaluates that the calculation formula corresponds to the deviation amount (YES in S 24), the correction amount calculation unit 107 calculates a correction amount for each of the divided regions (S25), and ends the present processing.

FIG. 19 is a diagram illustrating a state in which the number of input images, corresponding to the deviation amount, is designated. An upper part of FIG. 19 illustrates the deviation amount [px] for each divided region, and the upper part of FIG. 19 illustrates an appropriate calculation formula for each divided region.

The result evaluation unit 106 obtains the calculation formula corresponding to the deviation amount in each region. For example, if the deviation amount is less than 1.0, a calculation formula a is used. On the other hand, a calculation formula b is used when the deviation amount is 1.0 or more and less than 2.5, a calculation formula c is used when the deviation amount is 2.5 or more and less than 3.5, and a calculation formula d is used when the deviation amount is 3.5 or more. As the calculation formulas a to d described here, above-described Expressions (1), (4), and the like or an expression (not illustrated) are used.

In the camera calibration device 100 according to the third embodiment described above, the calculation formula can be arbitrarily changed. Therefore, by using an appropriate calculation formula selected according to the environment in which the calibration chart 20 is actually imaged, a calculation accuracy of the correction amount can be improved.

[Fourth Embodiment]

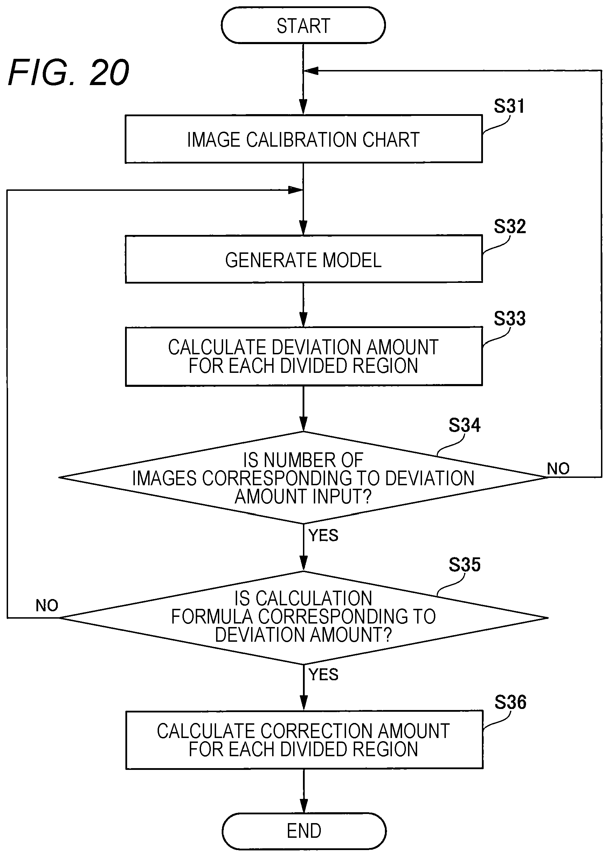

Next, a camera calibration method according to a fourth embodiment of the present invention performed by the camera calibration device 100 will be described with reference to FIG. 20.

A configuration of the camera calibration device 100 according to the fourth embodiment may be similar to the configuration of the camera calibration device 100 according to the first embodiment. In the camera calibration device 100 according to the fourth embodiment, the camera calibration method according to the second embodiment and the camera calibration method according to the third embodiment are simultaneously performed. In this regard, the number of input images is changed according to the deviation amount obtained by the deviation amount calculation unit 105, and the calculation formula is changed to perform the calibration.

<Example of camera calibration method according to fourth embodiment>

FIG. 20 is a flowchart illustrating an example of the camera calibration method according to the fourth embodiment. Note that, in the flowchart illustrated in FIG. 20, it is assumed that the marker position detection (S2), the image position calculation (S4), and the parameter estimation (S5) among the steps of the flowchart of the camera calibration method according to the first embodiment illustrated in FIG. 12 have already been performed, and a detailed description thereof will be omitted.

As described above, the camera calibration method according to the fourth embodiment is a combination of the camera calibration method according to the second embodiment and the camera calibration method according to the third embodiment. If the calculation of the deviation amount according to the weight has not been performed, the evaluation unit (result evaluation unit 106) gives an instruction to change the number of images input to the deviation amount calculation unit (deviation amount calculation unit 105) for each region and gives an instruction to change the calculation formula for the deviation amount calculation unit (deviation amount calculation unit 105) to calculate the deviation amount for each region, according to the weight set for the region. The instruction to change the number of images for each region is input to the camera 10, so that the camera 10 recaptures an image of the calibration chart 20. Thereafter, the recaptured image P1 is input to the deviation amount calculation unit 105, and the deviation amount is calculated with the number of images P1 set in the region. At the same time, the instruction to change the calculation formula is input to the camera 10, and is input to the deviation amount calculation unit 105 through the camera 10. Then, the deviation amount calculation unit 105 recalculates the deviation amount in the region for which the change of the calculation formula is instructed, by using the calculation formula changed according to the instruction.

The processing of steps S31, S33, and S34 illustrated in FIG. 20 is the same as the processing of steps S11 to S13 illustrated in FIG. 14. In addition, the processing of steps S31 to S33 and S35 illustrated in FIG. 20 is the same as the processing of steps S21 to S24 illustrated in FIG. 14.

Then, if it is evaluated in step S35 that the calculation formula corresponds to the deviation amount (YES in S35), the correction amount calculation unit 107 calculates a correction amount for each of the divided regions (S36), and ends the present processing.

In the camera calibration device 100 according to the fourth embodiment described above, it is possible to more accurately correct the deviation amount by changing the number of input images and changing the calculation formula according to the deviation amount.

Note that the present invention is not limited to the above-described embodiments, and it goes without saying that various other application examples and modifications can be taken without departing from the gist of the present invention described in the claims.

For example, the above-described embodiments describe the configuration of the device in detail and specifically for easy understanding of the present invention, and are not necessarily limited to those having all the described configurations. In addition, a part of the configuration of the embodiment described here can be replaced with the configuration of another embodiment, and further, the configuration of another embodiment can be added to the configuration of a certain embodiment. In addition, it is possible to add, delete, and replace other configurations for a part of the configuration of each embodiment.

In addition, the control lines and the information lines indicate what is considered to be necessary for the description, and do not necessarily indicate all the control lines and the information lines on the product. In practice, it may be considered that almost all the configurations are connected to each other.

Reference Signs List

| | |
|---|---|
| 1 | refractive layer |
| 10 | camera |
| 20 | calibration chart |
| 100 | camera calibration device |
| 101 | marker position detection unit |
| 102 | model generation unit |
| 103 | image position calculation unit |
| 104 | parameter estimation unit |
| 105 | deviation amount calculation unit |
| 106 | result evaluation unit |
| 107 | correction amount calculation unit |

**Claims**

1. A camera calibration device comprising:

    a deviation amount calculation unit which calculates a deviation amount between a detection position of a calibration object, which is detected for each of regions, with a predetermined size, of an image obtained by a camera imaging the object through a refractive layer, and a calculation position of the object, which is calculated for each of the regions of an image which the camera is capable of capturing without passing through the refractive layer;
    an evaluation unit which evaluates the deviation amount for each of the regions; and
    a correction amount calculation unit which calculates, for each of the regions, a correction amount for correcting the detection position of the object to the calculation position of the object, according to an evaluation result of the deviation amount, and calibrates the camera on a basis of the correction amount of the deviation amount calculated for each of the regions.

2. The camera calibration device according to claim 1, wherein
    the evaluation unit sets a weight for each of the regions, evaluates whether or not calculation of the deviation amount according to the weight has been performed for each of the regions, gives an instruction to cause the calculation of the deviation amount according to the weight if the calculation of the deviation amount according to the weight has not been performed, and outputs the deviation amount to the correction amount calculation unit if the calculation of the deviation amount according to the weight has been performed.

3. The camera calibration device according to claim 2, wherein
    if the calculation of the deviation amount according to the weight has not been performed, the evaluation unit gives an instruction to change a number of the images input to the deviation amount calculation unit for each of the regions, according to the weight set for the region.

4. The camera calibration device according to claim 2, wherein
    if the calculation of the deviation amount according to the weight has not been performed, the evaluation unit gives an instruction to change a calculation formula for the deviation amount calculation unit to calculate the deviation amount for each of the regions, according to the weight set for the region.

5. The camera calibration device according to claim 2, wherein

if the calculation of the deviation amount according to the weight has not been performed, the evaluation unit gives an instruction to change a number of the images input to the deviation amount calculation unit for each of the regions, and gives an instruction to change a calculation formula for the deviation amount calculation unit to calculate the deviation amount for each of the regions, according to the weight set for the region.

6. The camera calibration device according to claim 4, wherein
the calibration object is at least one of a two-dimensional calibration chart or a three-dimensional calibration chart.

7. The camera calibration device according to claim 2, comprising:

a model generation unit which performs modeling considering the refractive layer on a basis of the weight and a plurality of the images which are obtained by the camera imaging the calibration object and input to the deviation amount calculation unit, wherein
the deviation amount calculation unit calculates a calculation position of the object using a calculation formula of the modeled refractive layer.

8. A camera calibration method comprising:

a step of calculating a deviation amount between a detection position of a calibration object, which is detected for each of regions, with a predetermined size, of an image obtained by a camera imaging the object through a refractive layer, and a calculation position of the object, which is calculated for each of the regions of an image which the camera is capable of capturing without passing through the refractive layer;
a step of evaluating the deviation amount for each of the regions;
a step of calculating, for each of the regions, a correction amount for correcting the detection position of the object to the calculation position of the object, according to an evaluation result of the deviation amount; and
a step of calibrating the camera on a basis of the correction amount of the deviation amount calculated for each of the regions.

FIG. 1

*FIG. 2*

**10**

CAMERA

IMAGE — P1

**100**

CAMERA CALIBRATION DEVICE

| MARKER POSITION DETECTION UNIT | 101 |

| MODEL GENERATION UNIT | 102 |

| IMAGE POSITION CALCULATION UNIT | 103 |

| PARAMETER ESTIMATION UNIT | 104 |

| DEVIATION AMOUNT CALCULATION UNIT | 105 |

| RESULT EVALUATION UNIT | 106 |

| CORRECTION AMOUNT CALCULATION UNIT | 107 |

*FIG. 3A*

*FIG. 3B*

*FIG. 3C*

*FIG. 4A*

R11

FRONT

R12

1

10

*FIG. 4B*

1

10

R21

FRONT

R22

## FIG. 5

FIG. 6

FIG. 7

(WITH $x$ DISTORTION, WITH $y$ DISTORTION)

## FIG. 8

FIG. 9

# FIG. 10

P1

CALCULATION POINT
$P'_{ij}(x_{ij}, y_{ij})$

DETECTION POINT
$Q_{ij}(u_{ij}, v_{ij})$

*FIG. 11*

*FIG. 12*

```
                    ┌─────────────┐
                    │    START    │
                    └──────┬──────┘
                           │         S1
                    ┌──────▼──────────────┐
                    │ IMAGE CALIBRATION   │
                    │       CHART         │
                    └──────┬──────────────┘
                           │         S2
                    ┌──────▼──────────────┐
                    │ DETECT MARKER       │
                    │     POSITION        │
                    └──────┬──────────────┘
                           │         S3
                    ┌──────▼──────────────┐
                    │  GENERATE MODEL     │
                    └──────┬──────────────┘
                           │         S4
                    ┌──────▼──────────────┐
                    │ CALCULATE IMAGE     │
                    │     POSITION        │
                    └──────┬──────────────┘
                           │         S5
                    ┌──────▼──────────────┐
                    │ ESTIMATE PARAMETER  │
                    └──────┬──────────────┘
                           │         S6
                    ┌──────▼──────────────┐
                    │ CALCULATE DEVIATION │
                    │ AMOUNT FOR EACH     │
                    │  DIVIDED REGION     │
                    └──────┬──────────────┘
                           │         S7
                    ┌──────▼──────────────┐
                    │ EVALUATE DEVIATION  │
                    │     AMOUNT          │
                    └──────┬──────────────┘
                           │         S8
                    ◇ IS EVALUATION RESULT ◇──NO──┐
                    ◇    EXCELLENT?        ◇       │
                           │YES                    │
                           │         S9            │
                    ┌──────▼──────────────┐        │
                    │ CALCULATE CORRECTION│        │
                    │ AMOUNT FOR EACH     │        │
                    │  DIVIDED REGION     │        │
                    └──────┬──────────────┘        │
                           │                       │
                    ┌──────▼──────┐                │
                    │     END     │                │
                    └─────────────┘                │
```

IMAGE CALIBRATION CHART — S1

DETECT MARKER POSITION — S2

GENERATE MODEL — S3

CALCULATE IMAGE POSITION — S4

ESTIMATE PARAMETER — S5

CALCULATE DEVIATION AMOUNT FOR EACH DIVIDED REGION — S6

EVALUATE DEVIATION AMOUNT — S7

IS EVALUATION RESULT EXCELLENT? — S8

CALCULATE CORRECTION AMOUNT FOR EACH DIVIDED REGION — S9

<u>70</u>

74

71

CPU

72

ROM

73

RAM

NONVOLATILE
STORAGE
75

76

NETWORK
INTERFACE

*FIG. 13*

```
                    ┌─────────────┐
                    │    START    │
                    └─────────────┘
                           │
                           │◄──────────────────────┐
                           ▼                        │
                                              S11   │
                 ┌──────────────────────────┐       │
                 │   IMAGE CALIBRATION CHART │       │
                 └──────────────────────────┘       │
                           │                        │
                           │                  S12   │
                           ▼                        │
                 ┌──────────────────────────┐       │
  FIG. 14        │  CALCULATE DEVIATION AMOUNT│      │
                 │   FOR EACH DIVIDED REGION │       │
                 └──────────────────────────┘       │
                           │                        │
                           ▼              S13        │
                      ╱─────────────╲     NO         │
                    ╱  IS NUMBER OF   ╲──────────────┘
          ◄────────  IMAGES CORRESPONDING TO DEVIATION
                    ╲   AMOUNT INPUT? ╱
                      ╲─────────────╱
                           │
                           │ YES
                           ▼              S14
                 ┌──────────────────────────┐
                 │  CALCULATE CORRECTION AMOUNT│
                 │   FOR EACH DIVIDED REGION │
                 └──────────────────────────┘
                           │
                           ▼
                    ┌─────────────┐
                    │     END     │
                    └─────────────┘
```

DEVIATION AMOUNT [px]

| 2.8 | 0.7 | 3.1 |
|-----|-----|-----|
| 2.9 | 0.3 | 3.2 |
| 4.1 | 2.2 | 4.1 |

*FIG. 15*

INPUT IMAGE(S) [COUNT]

| 3 | 1 | 3 |
|---|---|---|
| 3 | 1 | 3 |
| 4 | 2 | 4 |

*FIG. 16*

FIG. 17A

20(1)

P1

FIG. 17B

20(2)

P1

FIG. 17C

20(3)

P1

START

S21

IMAGE CALIBRATION CHART

S22

GENERATE MODEL

*FIG. 18*

S23

CALCULATE DEVIATION AMOUNT
FOR EACH DIVIDED REGION

S24

IS CALCULATION
FORMULA CORRESPONDING TO
DEVIATION AMOUNT?

NO

YES

S25

CALCULATE CORRECTION AMOUNT
FOR EACH DIVIDED REGION

END

DEVIATION AMOUNT [px]

| | | |
|---|---|---|
| 2.8 | 0.7 | 3.1 |
| 2.9 | 0.3 | 3.2 |
| 4.1 | 2.2 | 4.1 |

*FIG. 19*

CALCULATION FORMULA

| | | |
|---|---|---|
| c | a | c |
| c | a | c |
| d | b | d |

*FIG. 20*

START

S31 — IMAGE CALIBRATION CHART

S32 — GENERATE MODEL

S33 — CALCULATE DEVIATION AMOUNT FOR EACH DIVIDED REGION

S34 — IS NUMBER OF IMAGES CORRESPONDING TO DEVIATION AMOUNT INPUT? — NO / YES

S35 — IS CALCULATION FORMULA CORRESPONDING TO DEVIATION AMOUNT? — NO / YES

S36 — CALCULATE CORRECTION AMOUNT FOR EACH DIVIDED REGION

END

## INTERNATIONAL SEARCH REPORT

| International application No. |
|---|
| **PCT/JP2022/046243** |

| A. | CLASSIFICATION OF SUBJECT MATTER |
|---|---|

*H04N 23/60*(2023.01)i
FI: H04N23/60

According to International Patent Classification (IPC) or to both national classification and IPC

| B. | FIELDS SEARCHED |
|---|---|

Minimum documentation searched (classification system followed by classification symbols)

H04N23/60

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-163866 A (RICOH CO LTD) 10 September 2015 (2015-09-10) paragraphs [0002]-[0003], [0008], [0011]-[0042], fig. 3-4 | 1, 8 |
| A | | 2-7 |
| A | JP 2019-68272 A (DENSO CORP) 25 April 2019 (2019-04-25) paragraphs [0001], [0016]-[0026], fig. 2 | 1-8 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/046243**

| Patent document cited in search report | | | Publication date (day/month/year) | Patent family member(s) | | | Publication date (day/month/year) |
|---|---|---|---|---|---|---|---|
| JP | 2015-163866 | A | 10 September 2015 | JP | 2019-132855 | A | |
| | | | | EP | 2902967 | A1 | |
| | | | | paragraphs [0002]-[0003], [0008], [0014]-[0045], fig. 3-4 | | | |
| | | | | EP | 3514758 | A1 | |
| JP | 2019-68272 | A | 25 April 2019 | US | 2019/0102869 | A1 | |
| | | | | paragraphs [0001], [0021]-[0031], fig. 2 | | | |

Form PCT/ISA/210 (patent family annex) (January 2015)

**REFERENCES CITED IN THE DESCRIPTION**

**Patent documents cited in the description**

- JP 2022109555 A